# EUROPÄISCHE PATENTSCHRIFT

(11) **EP 3 161 946 B1**
(45) Veröffentlichungstag und Bekanntmachung des Hinweises auf die Patenterteilung: **09.10.2019**
(21) Anmeldenummer: 15730789.3
(22) Anmeldetag: 23.06.2015
(51) Int. Cl.: F16H 1/16, F16H 57/039, H02K 7/08, F16H 57/021

(54) **ANTRIEBSEINHEIT**
DRIVE UNIT
UNITÉ D'ENTRAÎNEMENT

(30) Priorität: 25.06.2014 DE 102014212133
(43) Veröffentlichungstag der Anmeldung: 03.05.2017
(73) Patentinhaber: Robert Bosch GmbH, 70442 Stuttgart (DE)
(72) Erfinder: SCHORPP, Gerold, 76474 Au am Rhein (DE); STEUER, Peter, 76149 Karlsruhe (DE); REICHMANN, Siegfried, 77866 Rheinau Freistett (DE)
(86) Internationale Anmeldenummer: PCT/EP2015/064032
(87) Internationale Veröffentlichungsnummer: WO 2015/197573

(56) Entgegenhaltungen:
- WO-A1-01/38944
- WO-A2-2009/052768
- DE-A1-102007 047 369
- DE-A1-102012 208 972
- US-A- 3 690 194

## Beschreibung

### Stand der Technik

Die Erfindung betrifft eine Antriebseinheit nach dem Oberbegriff des Anspruchs 1.

Eine derartige Antriebseinheit ist aus der DE 10 2010 064 295 A1 der Anmelderin bekannt. Die bekannte Antriebseinheit ist Bestandteil eines Komfortantriebs in einem Kraftfahrzeug, wie beispielsweise einem Fensterheberantrieb, einem Schiebedachantrieb, einem Sitzverstellungsantrieb. Insbesondere weist die bekannte Antriebseinheit beidseitig eines Antriebsmotors ein erstes und ein zweites Lagerelement zur Lagerung einer Antriebswelle auf. Die Antriebswelle wirkt mit einer Schneckenverzahnung mit einer Gegenverzahnung eines als Stirnrad ausgebildeten Getrieberads zusammen. Auf der dem Antriebsmotor abgewandten Seite des Getrieberads ist ein drittes Lagerelement vorgesehen, das dazu dient, quer zur Längsachse der Antriebswelle wirkende Kräfte, die zu einer Auslenkung der Antriebswelle führen, aufzunehmen bzw. abzustützen. Hierzu weist die bekannte Antriebseinheit bzw. deren drittes Lagerelement einen die Antriebswelle an ihrem Umfang vorzugsweise mit radialem Spiel umgreifenden Abschnitt auf, der über einen flexiblen Zwischenabschnitt mit einem in einer Aufnahme eines Getriebegehäuses angeordneten Lagerbereich verbunden ist. Insgesamt gesehen ist das einteilige dritte Lagerelement hülsenförmig ausgebildet mit einer Durchgangsöffnung zur Aufnahme des Endbereichs der Antriebswelle. Nachteilig bei der aus der genannten Schrift bekannten Antriebseinheit ist es, dass das dritte Lagerelement zu dessen Lagerung einen relativ großen Raumbedarf in dem Getriebegehäuse benötigt, da das dritte Lagerelement über dessen gesamten Umfang gesehen in einer entsprechenden Aufnahme des Getriebegehäuses angeordnet ist. Darüber hinaus schränkt der benötigte Raum für die Aufnahme des dritten Lagerelements den Bauraum bzw. die Möglichkeit einer Axialabstützung für den Endbereich der Antriebswelle ein oder macht eine derartige Axialabstützung nicht mehr möglich. Als besonders nachteilhaft ist darüber hinaus anzusehen, dass es bei einem radialen Spiel zwischen dem Umfang der Antriebswelle und dem dritten Lagerelement typischerweise aufgrund von Bauteiletoleranzen zu einem periodischen Berühren bzw. Anschlagen der Umfangsfläche der Antriebswelle an dem dritten Lagerelement kommt, was als störendes Geräusch wahrgenommen werden kann.

Mit der US 3 960 194 A ist ein Schneckengetriebe bekannt geworden, bei dem die Schneckenwelle mittels eines federbeaufschlagten Keilelements gegen das Schneckenrad gepresst wird.

Die DE 10 2007 047369 A1 zeigt ein Schneckengetriebe eines Lenksystems, bei dem ein Kugellager, in dem die Schneckenwelle gelagert ist, gegen das Schneckenrad gedrückt wird. Dies wird mit Hilfe eines beweglich gelagerten Druckstücks durchgeführt, das mittels eine s Federelements verspannt ist.

### Offenbarung der Erfindung

Ausgehend von dem dargestellten Stand der Technik liegt der Erfindung die Aufgabe zugrunde, eine Antriebseinheit nach dem Oberbegriff des Anspruchs 1 derart weiterzubilden, dass diese einerseits einen möglichst geringen Raumbedarf für die Aufnahme des dritten Lagerelements in dem Getriebegehäuse benötigt, und andererseits eine reduzierte Geräuschemission sowie zusätzlich eine möglichst einfache Anordnung einer Einrichtung zur Axialabstützung der Antriebswelle ermöglicht. Diese Aufgabe wird erfindungsgemäß bei einer Antriebseinheit mit den Merkmalen des Anspruchs 1 dadurch gelöst, dass die Aufnahme für das dritte Lagerelement, das der seitlichen Abstützung der Antriebswelle dient, im Getriebegehäuse in Bezug zur Antriebswelle seitlich neben der Antriebswelle in einem Teilbereich in Umfangsrichtung der Antriebswelle angeordnet ist, und dass das dritte Lagerelement ein Anlageelement aufweist, das in ständigem Anlagekontakt zur Antriebswelle angeordnet ist.

Mit anderen Worten gesagt bedeutet dies, dass durch die spezielle Ausbildung des dritten Lagerelements dieses lediglich an einem einzigen seitlichen Bereich in einer Aufnahme des Getriebegehäuses angeordnet sein muss, so dass es im Gegensatz zum Stand der Technik nicht mehr erforderlich ist, in dem Getriebegehäuse eine in Bezug auf die Antriebswelle in Umfangsrichtung vollständig umlaufende Aufnahme für das dritte Lagerelement auszubilden. Dadurch wird insbesondere zusätzlicher Einbauraum für eine Axialabstützung für die Antriebswelle geschaffen. Darüber hinaus ist durch die ständige Anlage des dritten Lagerelements an der Antriebswelle sichergestellt, dass keine Geräusche aufgrund eines lediglich zeitweisen Anliegens bzw. Kontaktieren der Antriebswelle an dem dritten Lagerelement entstehen können.

Vorteilhafte Weiterbildungen der erfindungsgemäßen Antriebseinheit sind in den Unteransprüchen aufgeführt.

In einer ersten konstruktiven Ausgestaltung des in Wirkverbindung mit der Antriebswelle angeordneten Anlageelements des dritten Lagerelements ist es vorgesehen, dass das Anlageelement auf der der Antriebswelle zugewandten Seite eine ebene Anlagefläche aufweist, derart, dass die Anlagefläche in Richtung der Längsachse der Antriebswelle linienförmig an der Antriebswelle anliegt. Eine derartige Ausbildung der Anlagefläche des dritten Lagerelements ermöglicht es beispielsweise, das dritte Lagerelement erst nach der Montage der Antriebswelle in das Getriebegehäuse einzusetzen, so dass sich eine größere Flexibilität hinsichtlich unterschiedlicher Montagemöglichkeiten der Antriebseinheit ergeben.

Alternativ ist es jedoch auch möglich, dass das Anlageelement des dritten Lagerelements auf der der Antriebswelle zugewandten Seite eine konkav gewölbte bzw. mit einem Radius versehene Anlagefläche aufweist, derart, dass die Anlagefläche in Umfangsrichtung der Antriebswelle an der Antriebswelle anliegt. Eine derartige Ausbildung der Anlagefläche des dritten Lagerelements ermöglicht eine verbesserte bzw. vergrößerte Anlage der Antriebswelle an der Anlagefläche des dritten Lagerelements.

Um sicherzustellen, dass das dritte Lagerelement mit seinem Anlageelement in ständigem Anlagekontakt zur Antriebswelle angeordnet ist, ist es vorgesehen, dass das Anlageelement durch wenigstens ein elastisches Zwischenelement mit einem Lagerabschnitt des dritten Lagerelements verbunden ist, dass der Lagerabschnitt in der Aufnahme des Getriebegehäuses form- oder klemmschlüssig angeordnet ist, und dass das Zwischenelement eine Anlagekraft auf das Anlageelement in Richtung der Antriebswelle erzeugt. Das dritte Lagerelement weist somit drei unterschiedliche Funktionsbereiche auf: Zum Einen das in ständigem Kontakt mit der Antriebswelle befindliche Anlageelement, zum Zweiten das Zwischenelement, das die benötigte Anlagekraft für das Anlageelement an die Antriebswelle erzeugt, und zum Dritten den

Lagerabschnitt, der in der Aufnahme des Getriebegehäuses angeordnet ist. Diese konstruktive Aufteilung des dritten Lagerelements in drei Funktionsbereiche ermöglicht es, den jeweiligen Funktionsbereich optimal an seine jeweilige Aufgabe anzupassen.

Um zu große Auslenkungen der Antriebswelle zu vermeiden, sodass Beschädigungen an der Antriebseinheit ausgeschlossen werden können, ist es vorgesehen, dass das Anlageelement mit einem Anschlag zusammenwirkt, der die Auslenkung des Anlageelements in einer Richtung senkrecht zur Längsachse der Antriebswelle begrenzt. Der Anschlag dient somit dem Schutz der Bestandteile der Antriebseinheit, so dass die Funktionalität der Antriebseinheit bis zur maximalen Auslenkung der Antriebswelle, bei der das Anlageelement mit dem Anschlag zusammenwirkt, sichergestellt ist.

In einer ersten konstruktiven Ausgestaltung des Anschlags ist es vorgesehen, dass der Anschlag am dritten Lagerelement selbst ausgebildet ist. Alternativ ist es jedoch auch in einer zweiten konstruktiven Ausgestaltung denkbar, dass der Anschlag am Getriebegehäuse ausgebildet ist.

Zur Erzeugung der benötigten Anlagekraft des Anlageelements an der Antriebswelle ist es in einer ersten konstruktiven Ausgestaltung vorgesehen, dass sich das wenigstens eine Zwischenelement im Wesentlichen in einer senkrecht zur Längsachse der Antriebswelle verlaufenden Richtung erstreckt. Eine derartige Anordnung bzw. Ausbildung des Zwischenelements hat insbesondere den Vorteil eines in Längsrichtung der Antriebswelle minimierten Bauraums für das dritte Lagerelement, was beispielsweise die Anordnung einer Einrichtung zur Aufnahme von Axialkräften der Antriebswelle erleichtert.

Alternativ ist es jedoch auch denkbar, dass sich das wenigstens eine Zwischenelement im Wesentlichen in einer parallel zur Längsachse der Antriebswelle verlaufenden Richtung erstreckt. Eine derartige Anordnung bzw. Ausbildung des Zwischenelements hat den Vorteil einer verbesserten Federwirkung des Anlageelements, da sich dadurch, ohne den Bauraum des Getriebegehäuses in einer senkrecht zur Längsachse der Antriebswelle verlaufenden Richtung zu vergrößern, die Möglichkeit bietet, das Zwischenelement beispielsweise mit einer relativ großen Länge auszubilden. Um stets eine sichere Anlage des Anlageelements des dritten Lagerelements an der Antriebswelle für den gesamten Bereich der möglichen Auslenkung der Antriebswelle zu ermöglichen, ist es vorgesehen, dass das Getriebegehäuse durch Wandabschnitte gebildete Führungsbereiche für das Anlageelement aufweist, die sich senkrecht zur Längsachse der Antriebswelle erstrecken und unter Ausbildung einer Spielpassung mit Seitenwänden des Anlageelements zusammenwirken.

In bevorzugter konstruktiver Ausgestaltung des das dritte Lagerelement aufnehmenden Getriebegehäuses ist es vorgesehen, dass das Getriebegehäuse ein vorzugsweise schalenförmig ausgebildetes Grundelement aufweist, in dem die Aufnahme für die Lagereinrichtung ausgebildet ist, und dass der Bereich der Aufnahme mittels eines mit dem Grundelement verbindbaren Deckelelements überdeckt ist, das an dem Lagerelement bereichsweise anliegt. Insbesondere erfolgt die Anlage des Deckelelements zumindest an dem Lagerabschnitt des dritten Lagerelements, um eine definierte Anordnung des Lagerabschnitts des dritten Lagerelements in dem Getriebegehäuse sicherzustellen.

Besonders einfach und kostengünstig lässt sich das dritte Lagerelement herstellen, wenn dieses als einteiliges Kunststoffspritzgußteil ausgebildet ist. Alternativ ist es jedoch auch denkbar, dass das dritte Lagerelement einstückig ausgebildet ist und aus einem gummielastischen Material besteht.

Bevorzugt ist eine Ausbildung der Antriebseinheit mit einer die Antriebswelle in Axialrichtung mit einer auf eine Stirnfläche der Antriebswelle wirkenden Abstützeinrichtung auszustatten, die die Antriebswelle in Richtung des Getriebeelements kraftbeaufschlagt.

Bevorzugt findet eine erfindungsgemäße Antriebseinheit Verwendung in einem Komfortantrieb in einem Kraftfahrzeug, wie einem Fensterheberantrieb, einem Schiebedachantrieb, einem Sitzverstellungsantrieb o.ä. Ein derartiger Komfortantrieb weist insbesondere den Vorteil geringer Geräuschemissionen und eines besonders kompakten Aufbaus auf.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine erfindungsgemäße Antriebseinheit in einer vereinfachten, teilweise geschnittenen Seitenansicht,
- Fig. 2: einen Teilbereich der Antriebseinheit gemäß Fig. 1 bei einer ersten Ausführungsform einer erfindungsgemäßen Lagereinrichtung in perspektivischer Ansicht,
- Fig. 3: ein bei der Antriebseinheit gemäß Fig. 2 verwendetes drittes Lagerelement in perspektivischer Einzeldarstellung,
- Fig. 4: einen bei der Antriebseinheit gemäß Fig. 2 verwendeten Getriebedeckel in perspektivischer Darstellung,
- Fig. 5: eine zweite Ausführungsform einer erfindungsgemäßen Lagereinrichtung in einem Getriebegehäuse in perspektivischer Darstellung,
- Fig. 6: ein drittes Lagerelement der Lagereinrichtung gemäß Fig. 5 in perspektivischer Einzeldarstellung,
- Fig. 7: eine dritte Ausführungsform einer erfindungsgemäßen Lagereinrichtung im Getriebegehäuse in perspektivischer Darstellung,
- Fig. 8: eine vierte erfindungsgemäße Lagereinrichtung im Einbauzustand im Getriebegehäuse in perspektivischer Darstellung,
- Fig. 9: das dritte Lagerelement, wie es in der Lagereinrichtung der Fig. 8 verwendet wird, in perspektivischer Einzeldarstellung,
- Fig. 10: eine fünfte Ausführungsform einer erfindungsgemäßen Lagereinrichtung im Einbauzustand in einem Getriebegehäuse in perspektivischer Darstellung,
- Fig. 11: den Einbauort des dritten Lagerelements in der Antriebseinheit gemäß Fig. 10 in vergrößerter, perspektivischer Einzeldarstellung,
- Fig. 12: eine sechste erfindungsgemäße Lagereinrichtung in einem Getriebegehäuse in perspektivischer Darstellung,
- Fig. 13: ein in der Fig. 12 vorgesehenes drittes Lagerelement in perspektivischer Einzeldarstellung,
- Fig. 14: eine siebte Ausführungsform einer erfindungsgemäßen Lagereinrichtung in einem Getriebegehäuse in perspektivischer Darstellung,
- Fig. 15: ein drittes Lagerelement wie es in der Lagereinrichtung gemäß der Fig. 14 verwendet wird, in perspektivischer Einzeldarstellung,
- Fig. 16: eine achte erfindungsgemäße Ausbildung einer Lagereinrichtung in einem Getriebegehäuse in perspektivischer Darstellung,
- Fig. 17: ein drittes Lagerelement, wie es in der Fig. 16 verwendet wird, in perspektivischer Einzeldarstellung und
- Fig. 18: eine neunte erfindungsgemäße Lagereinrichtung unter Verwendung eines aus einem gummielastischen Material bestehenden dritten Lagerelements in einem Getriebegehäuse in perspektivischer Darstellung.

Gleiche Elemente bzw. Elemente mit gleicher Funktion sind in den Figuren mit den gleichen Bezugsziffern versehen.

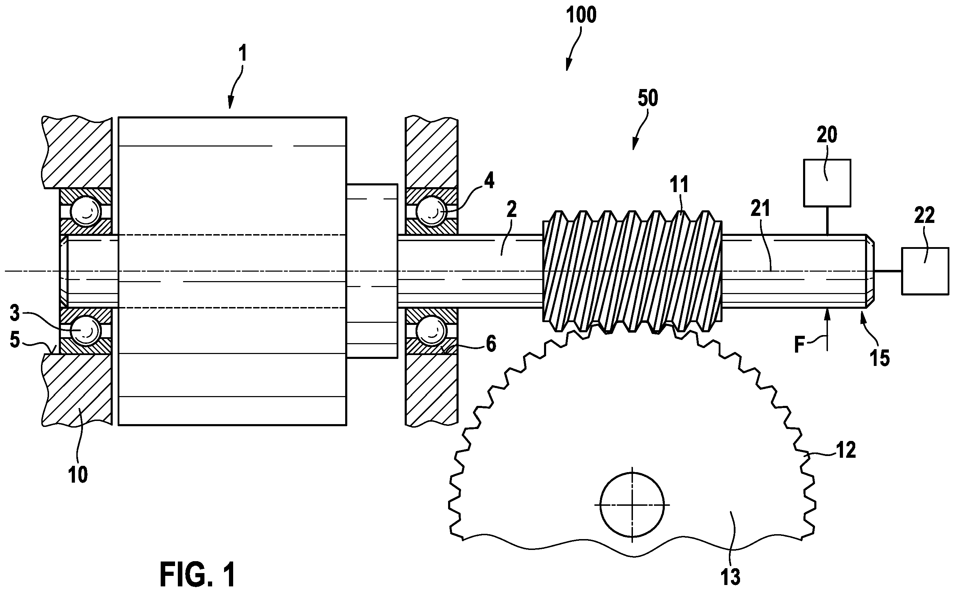

In der Fig. 1 ist der grundsätzliche Aufbau einer erfindungsgemäßen Antriebseinheit 100 in stark vereinfachter Form dargestellt, wie sie als Bestandteil eines Komfortantriebs in einem Kraftfahrzeug dient. Unter einem Komfortantrieb wird dabei im Rahmen der Erfindung beispielhaft, und nicht einschränkend, ein Fensterheberantrieb, ein Schiebedachantrieb, ein Sitzverstellungsantrieb o.ä. verstanden.

Die Antriebseinheit 100 weist einen als Elektromotor ausgebildeten Antriebsmotor 1 auf, der eine aus dem Gehäuse des Antriebsmotors 1 herausragende Antriebswelle 2 hat. Die Antriebswelle 2 des Antriebsmotors 1 ist beidseitig des Antriebsmotors 1 in einem vorzugsweise als Kugellager oder Gleitlager ausgebildeten ersten und zweiten Lagerelement 3, 4 gelagert. In dem in der Fig. 1 dargestellten Ausführungsbeispiel sind die beiden Lagerelemente 3, 4 in jeweils einer Aufnahme 5, 6 in einem in der Fig. 1 lediglich bereichsweise dargestellten Getriebegehäuse 10 aufgenommen bzw. angeordnet. Es ist jedoch selbstverständlich auch möglich, in Abänderung der Darstellung der Fig. 1 den Antriebsmotor 1 an ein entsprechendes Getriebegehäuse 10 mit einer Stirnseite des Antriebsmotors 1 anzuflanschen, wobei die beiden Lagerelemente 3, 4 dann zum Beispiel in einem Motorgehäuse des Antriebsmotors 1 angeordnet sind.

Auf der dem ersten Lagerelement 3 abgewandten Seite des zweiten Lagerelements 4 weist die Antriebswelle 2 einen Abschnitt mit einer Verzahnung 11 in Form einer Schneckenverzahnung auf. Die Verzahnung 11 wirkt mit einer Gegenverzahnung 12 eines ausschnittsweise dargestellten Getriebeeinrichtung in Form eines Getrieberads 13 zusammen, das in Form eines Stirnrads ausgebildet ist, und das aus Kunststoff besteht. Das Getrieberad 13 dient der Übertragung eines von dem Antriebsmotor 1 erzeugten Drehmoments auf ein nicht dargestelltes, zu verstellendes Element, beispielsweise einer Fensterscheibe oder einem Schiebedach.

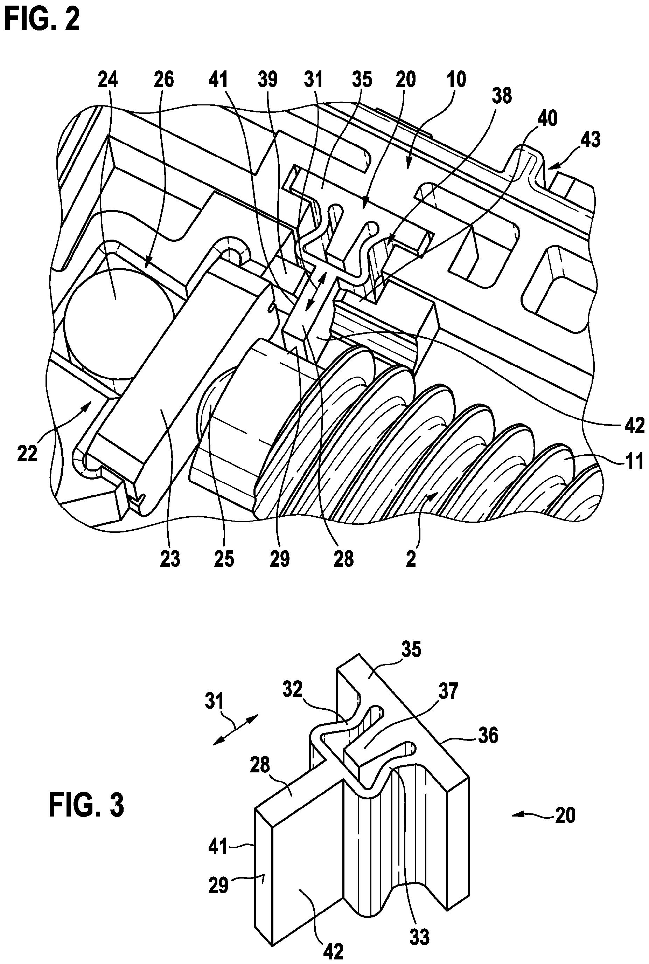

Der dem Antriebsmotor 1 abgewandte Endbereich 15 der Antriebswelle 2 wirkt mit einem dritten Lagerelement 20 als Abstützelement zusammen, das dazu ausgebildet ist, die Auslenkung des Endbereichs 15 der Antriebswelle 1 in einer senkrecht zur Längsachse 21 der Antriebswelle 2 verlaufenden, von dem Getrieberad 13 wegweisenden Richtung, verursacht durch eine Kraft F zwischen der Verzahnung 11 und der Gegenverzahnung 12, zu begrenzen. Die der Lagerung der Antriebswelle 2 dienende Lagereinrichtung 50 der Antriebseinheit 100 weist somit die drei Lagerelemente 3, 4 und 20 auf. Weiterhin wirkt der Endbereich 15 der Antriebswelle 2 mit einer Abstützeinrichtung 22 zusammen, die in Richtung der Längsachse 21 auf die Abstützeinrichtung 22 wirkende Längskräfte aufnimmt bzw. abstützt. Hierzu weist die Abstützeinrichtung 22, wie insbesondere anhand der Darstellung der Fig. 2 erkennbar ist, eine vorzugsweise aus Metall bestehende Abstützplatte 23 auf, die über ein elastisches Element 24 in Form beispielsweise eines zylindrischen Gummielements die Antriebswelle 2 in Axialrichtung abstützt, wobei die Abstützplatte 23 in Anlagekontakt mit dem vorzugsweise ballig ausgebildeten Wellenende 25 angeordnet ist. Die Abstützeinrichtung 22 ist in einem Aufnahmeraum 26 des Getriebegehäuses 10 angeordnet.

In den Fig. 2 und 3 ist das dritte Lagerelement 20 der Lagereinrichtung 50 in einer ersten Ausführungsform der Erfindung näher dargestellt. Insbesondere erkennt man, dass das aus Kunststoff bestehende, einstückig ausgebildete und im Spritzgussverfahren hergestellte dritte Lagerelement 20 im Wesentlichen aus drei Bereichen besteht: Der erste Bereich ist gebildet durch ein blockförmiges Anlageelement 28, das auf der der Antriebswelle 2 zugewandten Seite eine ebene Anlagefläche 29 aufweist. Das Anlageelement 28 ist über zwei parallel zueinander angeordnete, in Richtung des Doppelpfeils 31 elastisch verformbare Zwischenelemente 32, 33 mit einem Lagerabschnitt 35 verbunden. Der im Wesentlichen plattenförmig ausgebildete Lagerabschnitt 35 weist senkrecht zu einer Rückseite 36 ein stegförmig ausgebildetes Anschlagelement 37 auf, das die Auslenkung des Anlageelements 28 in Richtung zum Lagerabschnitt 35 hin, d.h. senkrecht zur Längsachse 21 der Antriebswelle 2, begrenzt, wobei das Anschlagelement 37 fluchtend zum Anlageelement 28 angeordnet ist.

Der Lagerabschnitt 35 ist in einer Aufnahme 38 des Getriebegehäuses 10 seitlich neben der Antriebswelle 2 über einen Teilbereich der Antriebswelle 2 in deren Umfangsrichtung betrachtet zumindest bereichsweise form- bzw. klemmschlüssig aufgenommen. Demgegenüber sind die beiden Zwischenelemente 32, 33 mit Spiel in der Aufnahme 38 angeordnet, um eine Deformation der Zwischenelemente 32, 33 zu ermöglichen. Die Aufnahme 38 weist als Führungsbereiche dienende Wandabschnitte 39, 40 auf, die über eine Spielpassung mit Seitenwänden 41, 42 des Anlageelements 28 zusammenwirken, und die bei einer Auslenkung des Anlageelements 28 in Richtung des Anschlagelements 37 eine Führung des Anlageelements 28 in einer senkrecht zur Längsachse 21 der Antriebswelle 2 verlaufenden Richtung bewirken.

Wesentlich für das Anlageelement 28 ist, dass die Anordnung des dritten Lagerelements 20 in der Aufnahme 38 derart ist, dass über die beiden Zwischenelemente 32, 33 das Anlageelement 28 mit einer Anlagekraft auf den Umfang der Antriebswelle 2 beaufschlagt wird, sodass das Anlageelement 28 mit seiner Anlagefläche 29 stets in Anlagekontakt mit der Umfangsfläche der Antriebswelle 2 angeordnet ist. Der Kontakt erfolgt dabei parallel zur Längsachse 21 der Antriebswelle 2 linienförmig über die Breite der Anlagefläche 29.

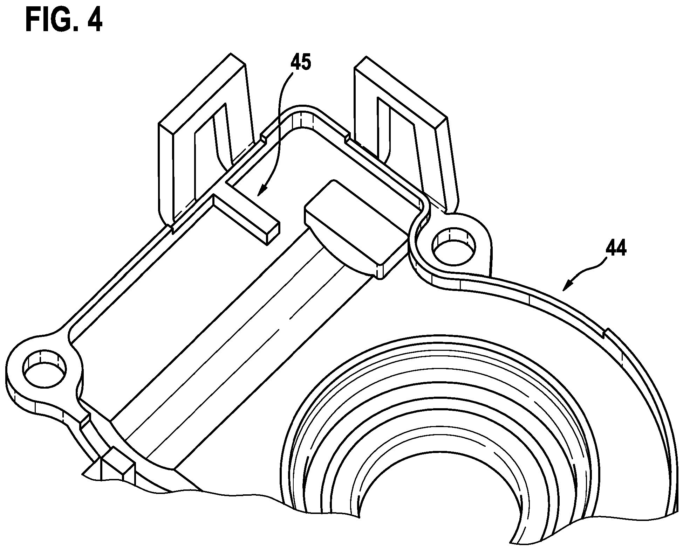

Die Aufnahme 38 für das dritte Lagerelement 20 ist in einem vorzugsweise schalenförmig ausgebildeten Grundelement 43 des ebenfalls vorzugsweise im Kunststoffspritzgussverfahren hergestellten Getriebegehäuses 10 ausgebildet. Um im Einbauzustand des dritten Lagerelements 20 das dritte Lagerelement 20 in der Aufnahme 38 zu positionieren bzw. zu sichern, ist das Grundelement 43 zumindest im Bereich des dritten Lagerelements 20 von einem in der Fig. 4 erkennbaren Deckelelement 44 überdeckt. Das Deckelelement 44 weist einen leistenförmigen Abstützkörper 45 auf, der im montierten Zustand des Getriebegehäuses 10 mit dem Grundelement 43 an der Oberseite des Lagerabschnitts 35 anliegt und diesen somit in der Aufnahme 38 positioniert bzw. fixiert.

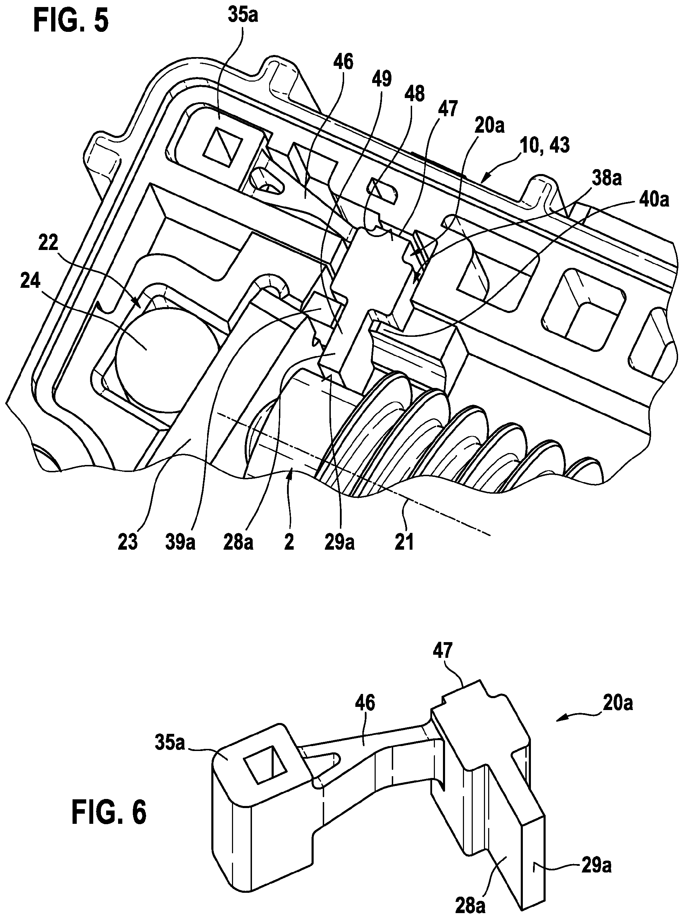

In den Fig. 5 und 6 ist ein modifiziertes drittes Lagerelement 20a dargestellt, das sich von dem Lagerelement 20 dadurch unterscheidet, dass das Anlageelement 28a und der Lagerabschnitt 35a über ein einziges Zwischenelement 46 verbunden sind. Im Unterschied zu den beiden Zwischenelementen 32, 33 des dritten Lagerelements 20 erstreckt sich das Zwischenelement 46 im Einbauzustand im Getriebegehäuse 10 im Wesentlichen in einer parallel zur Längsachse 21 der Antriebswelle 2 verlaufenden Richtung, sodass auch die Aufnahme 38a in dem Getriebegehäuse 10 sich im Wesentlichen (im Gegensatz zur Aufnahme 38 für das dritte Lagerelement 20) parallel zur Längsachse 21 der Antriebswelle 2 erstreckt. Hierbei verläuft ein Teil der Aufnahme 38 seitlich neben der Abstützeinrichtung 22. Auch das Anlageelement 28a weist eine ebene Anlagefläche 29a zur Anlage an der Umfangfläche der Antriebswelle 2 auf und ist durch das Zwischenelement 46 derart in Richtung der Antriebswelle 2 kraftbeaufschlagt, dass eine ständige Anlage der Anlagefläche 29a an der Antriebswelle 2 ermöglicht wird. Das Anlageelement 28a weist auf der der Anlagefläche 29a abgewandten Seite eine ebene Rückseite 47 auf, die mit einer durch einen Teilbereich der Aufnahme 38a ausgebildeten Anschlagfläche 48 zusammenwirkt, um die Bewegung des Anlageelements 28a bei einer Auslenkung der Antriebswelle 2 zu begrenzen.

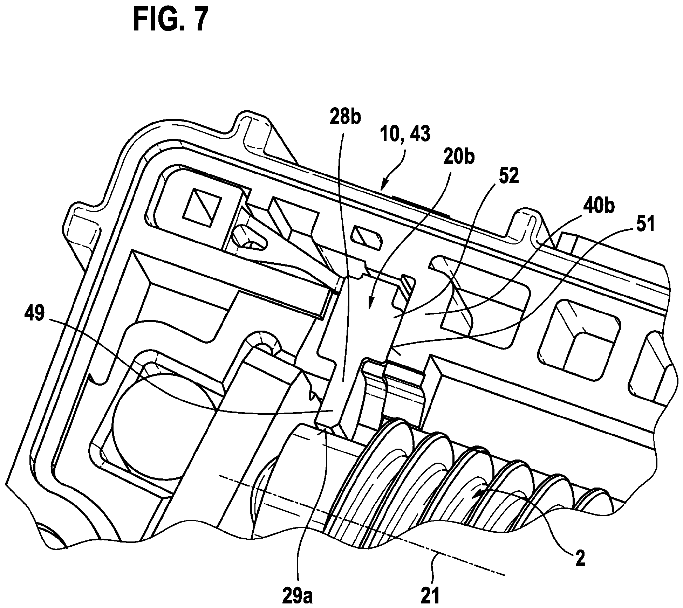

Das dritte Lagerelement 20b der Fig. 7 ist zumindest im Wesentlichen identisch zum dritten Lagerelement 20a entsprechend den Fig. 5 und 6 ausgebildet. Unterschiede ergeben sich lediglich in der (seitlichen) Führung der Anlageelemente 28a, 28b. Während bei dem Anlageelement 28a entsprechend der Fig. 5 das Anlageelement 28a im Bereich eines relativ schmal ausgebildeten, stegförmigen Bereichs 49 an Wandabschnitten 39a, 40a der Aufnahme 38a erfolgt, erfolgt die Führung des Anlageelements 28b über einen in senkrechter Richtung zur Längsachse 21 verlaufenden vergrößerten Bereich des Anlageelements 28b. Hierzu ist beispielsweise die eine Seitenfläche 51 des Anlageelements 28b verlängert ausgebildet und reicht sowohl über den Bereich 49, als auch über einen gegenüber dem Bereich 49 verbreitert ausgebildeten Bereich 52. Die Seitenfläche 51 wirkt mit einem gegenüber dem Wandabschnitt 40a verbreiterten Wandabschnitt 40b zusammen.

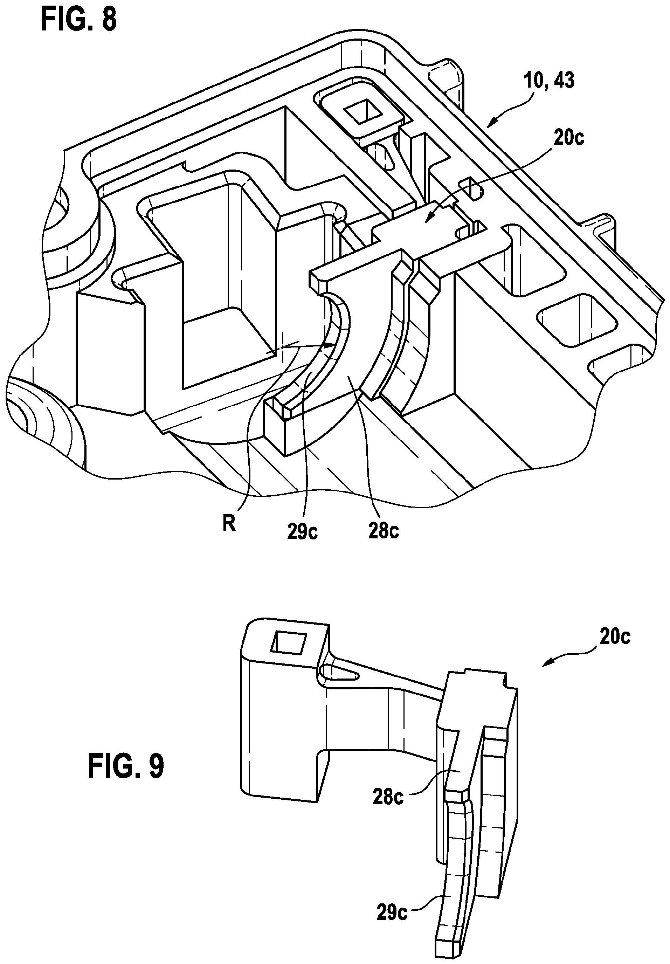

In den Fig. 8 und 9 ist ein drittes Lagerelement 20c dargestellt, das sich von dem Lagerelement 20a bzw. 20b im Wesentlichen dadurch unterscheidet, dass das Anlageelement 28c eine konkav ausgebildete bzw. mit einem Radius R versehene Anlagefläche 29c aufweist, die bereichsweise in Umfangsrichtung an der Antriebswelle 2 anliegt, beispielsweise über einen Winkelbereich von ca. 150°. Die Anlagefläche 29c umgreift somit die Umfangsfläche der Antriebswelle 2 bereichsweise formschlüssig und sichert bzw. stützt somit die Antriebswelle 2 auch in einer senkrecht zur Auslenkung der Antriebswelle 2 verlaufenden Richtung bei einer Auslenkung der Antriebswelle 2. Gegenüber den ebenen Anlageflächen 29, 29a liegt die Anlagefläche 29c somit über einen größeren Bereich an der Umfangsfläche der Antriebswelle 2 an.

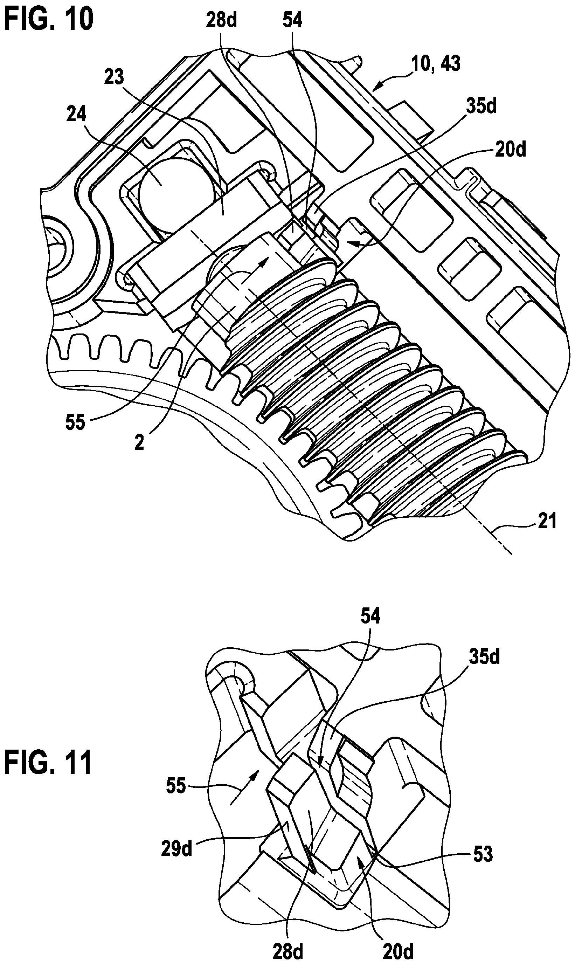

Das in den Fig. 10 und 11 dargestellte dritte Lagerelement 20d ist im Wesentlichen blockförmig ausgebildet. Es kann entweder einstückig an dem Getriebegehäuse 10 angeformt sein, wenn das Getriebegehäuse 10 aus einem geeigneten Werkstoff besteht, oder aber als separates Bauteil ausgebildet sein. In diesem Fall ist es ebenfalls in einer entsprechenden Aufnahme des Getriebegehäuses 10 angeordnet. Das dritte Lagerelement 20d weist zwei miteinander zusammenwirkende, jeweils blockförmige Abschnitte in Form eines Anlageelements 28d und eines Lagerabschnitts 35d auf, die über ein stegartig ausgebildetes, elastisches Zwischenelement 53 einstückig miteinander verbunden sind. Zwischen dem Anlageelement 28d und dem Lagerabschnitt 35d ist ein Federspalt 54 ausgebildet, der eine Bewegung des Anlageelements 28d in Richtung des Pfeils 55 ermöglicht, bis das Anlageelement 28d an dem Lagerabschnitt 35d anliegt. Die dem Lagerabschnitt 35d abgewandte Anlagefläche 29d des Anlageelements 28d ist ebenfalls eben ausgebildet, wobei das Anlageelement 28d unter Vorspannung stets an der Umfangsfläche der Antriebswelle 2 anliegt.

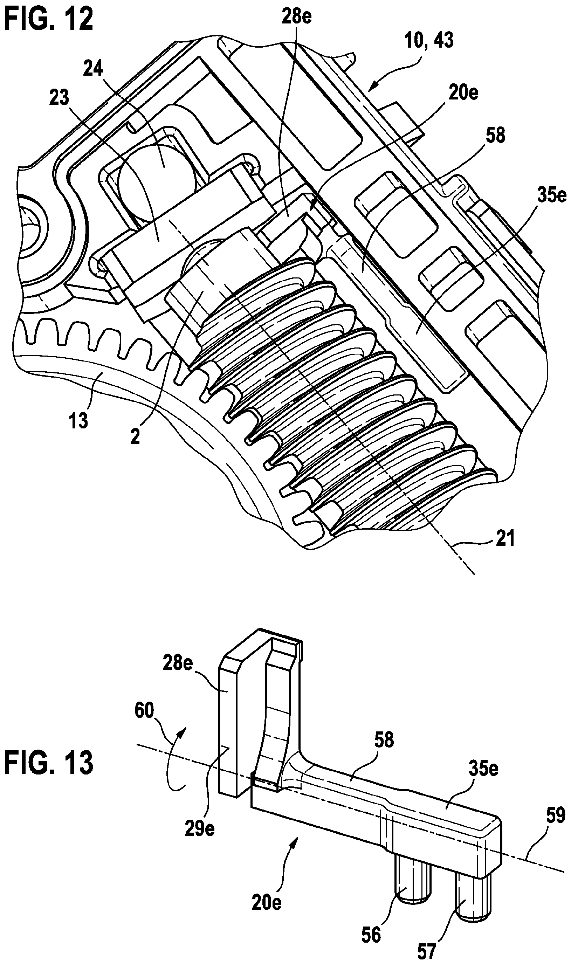

Das in den Fig. 12 und 13 dargestellte dritte Lagerelement 20e erstreckt sich mit seinem Lagerabschnitt 35e ebenfalls im Wesentlichen parallel zur Längsachse 21 der Antriebswelle 2 neben der Antriebswelle 2. Der Lagerabschnitt 35e weist zwei zapfenförmige Fortsätze 56, 57 auf, die in entsprechende Öffnungen bzw. Löcher im Getriebegehäuse 10 verankerbar sind. Der Lagerabschnitt 35e ist über ein zylindrisches Zwischenelement 58 mit dem Anlageelement 28e verbunden. Das Anlageelement 28e weist wiederum eine ebene Anlagefläche 29e zur ständigen Anlage an der Umfangsfläche der Antriebswelle 2 auf. Wesentlich ist, dass das dritte Lagerelement 20e in Form einer Torsionsfeder ausgebildet ist, bei der bei einer Auslenkung des Anlageelements 28e dieses um eine Längsachse 59 des Zwischenelements 58 in Richtung des Pfeils 60 geschwenkt wird. Auch hier ist durch eine entsprechende Formgebung bzw. Auslegung des dritten Lagerelements 20e eine ständige Anlage der Anlagefläche 29e an der Antriebswelle 2 gewährleistet.

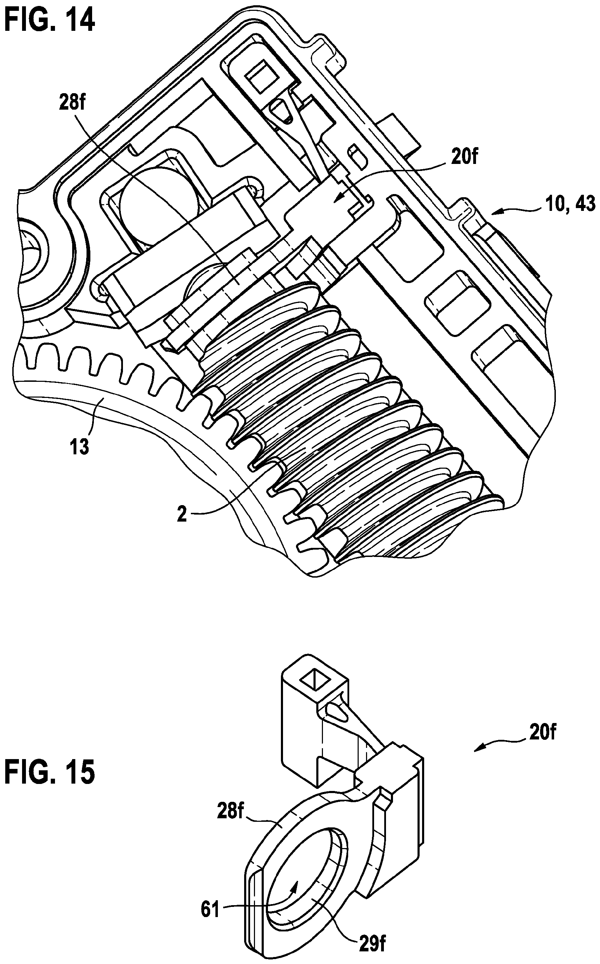

Das in den Fig. 14 und 15 dargestellte dritte Lagerelement 20f ist im Wesentlichen in Analogie zu dem dritten Lagerelement 20d entsprechend den Fig. 8 und 9 ausgebildet. Im Unterschied hierzu weist es ein Anlageelement 28f mit einer Durchgangsöffnung 61 auf, wobei die die Durchgangsöffnung 61 begrenzende Wand gleichzeitig die Anlagefläche 29f ausbildet. Der Durchmesser der Durchgangsöffnung 61 ist insbesondere möglicht genau auf den Außendurchmesser der Antriebswelle 2 im Anlagebereich der Anlagefläche 29f abgestimmt, derart, dass zwischen der Durchgangsöffnung 61 und dem Umfang der Antriebswelle 2 lediglich eine Spielpassung vorhanden ist, die eine problemlose Montage des dritten Lagerelements 20f auf der Antriebswelle 2 ermöglicht. Durch eine entsprechende Anordnung des dritten Lagerelements 20f ist auch hier sichergestellt, dass die Anlagefläche 29f sich stets in Anlagekontakt mit der Umfangsfläche der Antriebswelle 2 befindet.

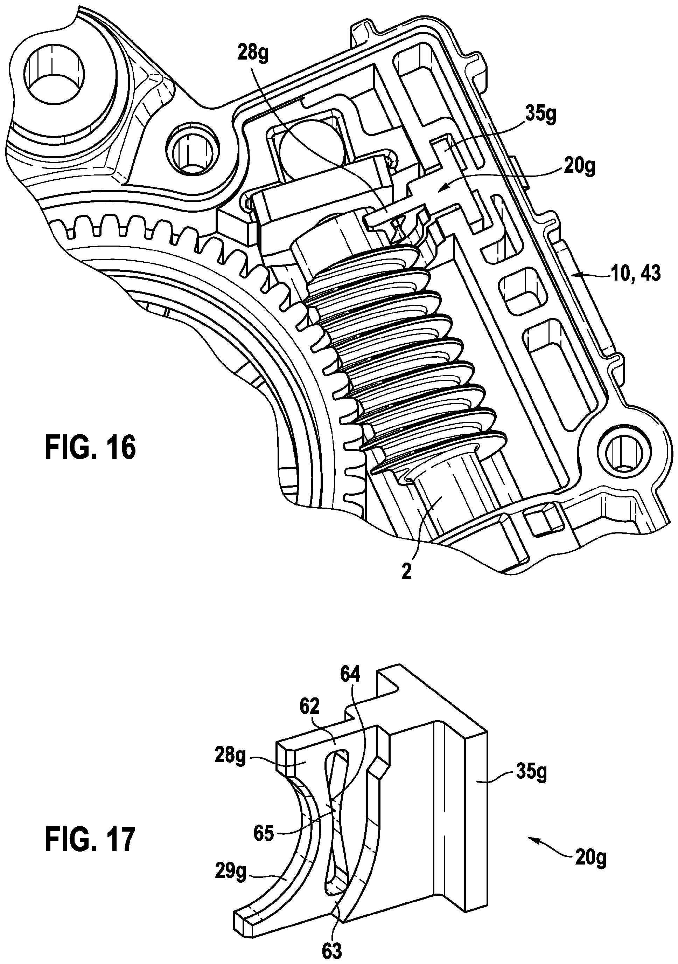

Das in den Fig. 16 und 17 dargestellte dritte Lagerelement 20g entspricht in etwa dem dritten Lagerelement 20a der Fig. 2 und 3. Im Unterschied hierzu ist jedoch die Anlagefläche 29g des Anlageelements 28g ebenfalls mit einem Radius ausgebildet, sodass es bereichsweise in Umfangsrichtung der Antriebswelle 2 bereichsweise an dieser anliegt. Ein unterer und ein oberer Bereich des Anlageelements 28g ist über elastische Zwischenelemente 62, 63 mit dem Lagerabschnitt 35g verbunden. Die der Anlagefläche 29g abgewandte Rückseite 64 des Anlageelements 28g ist beabstandet zu einer Anschlagfläche 65 des Lagerabschnitts 35g angeordnet, wobei die Rückseite 64 bei einer zu großen Auslenkung der Antriebswelle 2 an der Anschlagfläche 65 anliegt.

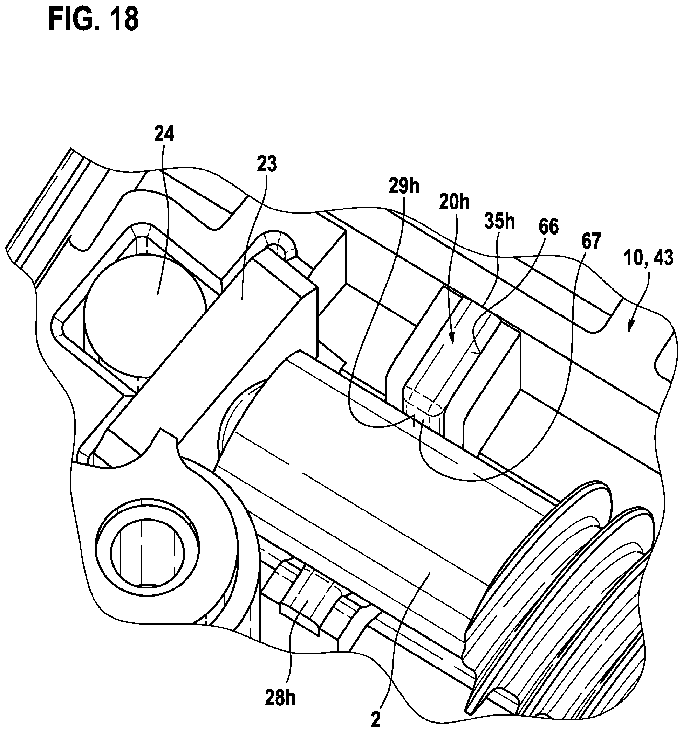

Zuletzt ist in der Fig. 18 ein drittes Lagerelement 20h dargestellt, welches in einer schlitzförmigen Aufnahme 66 des Getriebegehäuses 10 angeordnet ist. Wesentlich dabei ist, dass das dritte Lagerelement 20h aus einem gummielastischen Werkstoff besteht. Das dritte Lagerelement 20h weist eine mit einem Radius versehene Anlagefläche 29h auf, die bereichsweise an der Umfangsfläche der Antriebswelle 2 anliegt. Der Bereich der Anlagefläche 29h bildet gleichzeitig das Anlageelement 28h auf, während der Bereich des dritten Lagerelements 20h, der sich innerhalb der Aufnahme 66 befindet, den Lagerabschnitt 35h ausbildet. Das zwischen der Anlagefläche 29h und der Aufnahme 66 befindliche Material des dritten Lagerelements 20h bildet gleichzeitig das elastische Zwischenelement 67 aus, wobei die Anlagefläche 29h stets (bereichsweise) an der Umfangsfläche der Antriebswelle 2 anliegt.

Das mit dem dritten Lagerelement 20, 20a bis 20h ausgestattete Antriebseinheit 100 kann in vielfältiger Art und Weise abgewandelt bzw. modifiziert werden, ohne vom Erfindungsgedanken abzuweichen.

## Patentansprüche

1. Antriebseinheit (100) mit einem Antriebsmotor (1), einer Lagereinrichtung (50), einem Getriebegehäuse (10) und einem Getriebeelement (13), wobei der Antriebsmotor (1) über eine mehrfach gelagerte Antriebswelle (2) mit dem Getriebeelement (13) zusammenwirkt, wobei die Antriebswelle (2) ein erstes Lagerelement (3), das auf der dem Getriebeelement (13) gegenüberliegenden Seite des Antriebsmotors (1) angeordnet ist, ein zweites Lagerelement (4), das zwischen dem Antriebsmotor (1) und dem Getriebeelement (13) angeordnet ist und ein drittes Lagerelement (20; 20a bis 20h), das auf der dem Antriebsmotor (1) abgewandten Seite des Getriebeelements (13) angeordnet ist, aufweist, wobei das dritte Lagerelement (20; 20a bis 20h) in einer Richtung senkrecht zur Längsachse (21) der Antriebswelle (2) beweglich angeordnet ist, und wobei das dritte Lagerelement (20; 20a bis 20h) in einer Aufnahme (38; 38a; 66) des Getriebegehäuses (10) aufgenommen ist, wobei die Aufnahme (38; 38a; 66) für das dritte Lagerelement (20; 20a bis 20h) im Getriebegehäuse (10) in Bezug zur Antriebwelle (2) seitlich neben der Antriebswelle (2) in einem Teilbereich in Umfangsrichtung der Antriebswelle (2) angeordnet ist, und wobei das dritte Lagerelement (20; 20a bis 20h) ein Anlageelement (28; 28a bis 28h) aufweist, das in ständigem Anlagekontakt zur Antriebswelle (2) angeordnet ist, **dadurch gekennzeichnet, dass** das Anlageelement (28; 28a; 28b; 28d; 28e) mit einem Anschlag (37; 48; 65) zusammenwirkt, der die Auslenkung des Anlageelements (28; 28a; 28b; 28d; 28e) in einer senkrecht zur Längsachse (21) der der Antriebswelle (2) verlaufenden Richtung begrenzt.

2. Antriebseinheit nach Anspruch 1,
**dadurch gekennzeichnet,**
**dass** das Anlageelement (28; 28a; 28b; 28d; 28e) auf der der Antriebswelle (2) zugewandten Seite eine ebene Anlagefläche (29; 29a; 29b; 29d; 29e) aufweist, derart, dass die Anlagefläche (29; 29a; 29b; 29d; 29e) in Richtung der Längsachse (21) der Antriebswelle (2) linienförmig an der Antriebswelle (2) anliegt.

3. Antriebseinheit nach Anspruch 1,
**dadurch gekennzeichnet,**
**dass** das Anlageelement (28c; 28f; 28g; 28h) auf der der Antriebswelle (2) zugewandten Seite eine konkav gewölbte bzw. mit einem Radius (R) versehene Anlagefläche (29c; 29f; 29g; 29h) aufweist, derart, dass die Anlagefläche (29c; 29f; 29g; 29h) in Umfangsrichtung der Antriebswelle (2) an der Antriebswelle (2) anliegt.

4. Antriebseinheit nach einem der Ansprüche 1 bis 3,
**dadurch gekennzeichnet,**
**dass** das Anlageelement (28; 28a; 28b; 28d; 28e) durch wenigstens ein elastisches Zwischenelement (32, 33; 46; 53; 58; 62, 63; 67) mit einem Lagerabschnitt (35; 35a; 35d; 35e; 35g; 35h) des dritten Lagerelements (20; 20a bis 20h) verbunden ist, dass der Lagerabschnitt (35; 35a; 35d; 35e; 35g; 35h) in der Aufnahme (38; 38a; 66) des Getriebegehäuses (10) klemm- oder formschlüssig angeordnet ist, und dass das wenigstens eine Zwischenelement (32, 33; 46; 53; 58; 62, 63) eine Anlagekraft auf das Anlageelement (28; 28a; 28b; 28d; 28e) in Richtung der Antriebswelle (2) erzeugt.

5. Antriebseinheit nach einem der Ansprüche 1 bis 4,
**dadurch gekennzeichnet,**
**dass**
das Abstützelement dazu ausgebildet ist, die Auslenkung des Endbereichs (15) der Antriebswelle (1) in einer senkrecht zur Längsachse (21) der Antriebswelle (2) verlaufenden, von dem Getrieberad (13) wegweisenden Richtung, verursacht durch eine Kraft F zwischen der Verzahnung (11) und der Gegenverzahnung (12), zu begrenzen.

6. Antriebseinheit nach Anspruch 1,
**dadurch gekennzeichnet,**
**dass** der Anschlag (37; 65) am dritten Lagerelement (20; 20d; 20g; 20h) ausgebildet ist.

7. Antriebseinheit nach Anspruch 1,
**dadurch gekennzeichnet,**
**dass** der Anschlag (48) am Getriebegehäuse (10) ausgebildet ist.

8. Antriebseinheit nach einem der Ansprüche 4 bis 7,
**dadurch gekennzeichnet,**
**dass** sich das Zwischenelement (32, 33; 53; 62, 63; 67) im Wesentlichen in einer senkrecht zur Längsachse (21) der Antriebswelle (2) verlaufenden Richtung erstreckt.

9. Antriebseinheit nach einem der Ansprüche 4 bis 7,
**dadurch gekennzeichnet,**
**dass** sich das Zwischenelement (46; 58) im Wesentlichen in einer parallel zur Längsachse (21) der Antriebswelle (2) verlaufenden Richtung erstreckt.

10. Antriebseinheit nach einem der Ansprüche 1 bis 9,
**dadurch gekennzeichnet,**
**dass** das Getriebegehäuse (10) durch Wandabschnitte (39; 39a, 40; 40a; 40b) gebildete Führungsbereiche für das Anlageelement (28; 28a; 28b; 28c; 28f; 28g) aufweist, die sich senkrecht zur Längsachse (21) der Antriebswelle (2) erstrecken und unter Ausbildung einer Spielpassung mit Seitenwänden (41, 42; 51) des Anlageelements (28; 28a; 28b; 28c; 28f; 28g) zusammenwirken.

11. Antriebseinheit nach einem der Ansprüche 1 bis 10,
**dadurch gekennzeichnet,**
**dass** das Getriebegehäuse (10) ein vorzugsweise schalenförmig ausgebildetes Grundelement (43) aufweist, in dem die Aufnahme (38; 38a; 66) für die Lagereinrichtung (50) ausgebildet ist, und dass der Bereich der Aufnahme (38; 38a; 66) mittels eines mit dem Grundelement (43) verbindbaren Deckelelements (44) überdeckt ist, das an dem dritten Lagerelement (20; 20a bis 20h) bereichsweise anliegt.

12. Antriebseinheit nach einem der Ansprüche 1 bis 11,
**dadurch gekennzeichnet,**
**dass** das dritte Lagerelement (20; 20a bis 20h) als einteiliges Kunststoffspritzgußteil ausgebildet ist.

13. Antriebseinheit nach einem der Ansprüche 1 bis 11,
**dadurch gekennzeichnet,**
**dass** die dritte Lagereinrichtung (20h) einstückig ausgebildet ist und aus einem gummielastischen Material besteht.

14. Antriebseinheit nach einem der Ansprüche 1 bis 13
**dadurch gekennzeichnet,**
**dass** die Antriebswelle (2) in Axialrichtung mit einer auf eine Stirnfläche der Antriebswelle (2) wirkende Abstützeinrichtung (22) in Richtung des Getriebeelements (13) kraftbeaufschlagt ist.

15. Komfortantrieb in einem Kraftfahrzeug, wie Fensterheberantrieb, Schiebedachantrieb, Sitzverstellungsantrieb o.ä. mit einer Antriebseinheit (100) nach einem der Ansprüche 1 bis 14.

## Claims

1. Drive unit (100), comprising a drive motor (1), a bearing device (50), a gear housing (10) and a gear element (13), wherein the drive motor (1) interacts via a drive shaft (2), which is mounted at multiple points, with the gear element (13), wherein the drive shaft (2) comprises a first bearing element (3) which is arranged on that side of the drive motor (1) which is opposite the gear element (13), a second bearing element (4) which is arranged between the drive motor (1) and the gear element (13), and a third bearing element (20; 20a to 20h) which is arranged on that side of the gear element (13) which faces away from the drive motor (1), wherein the third bearing element (20; 20a to 20h) is arranged movably in a direction perpendicular to the longitudinal axis (21) of the drive shaft (2), and wherein the third bearing element (20; 20a to 20h) is accommodated in a receptacle (38; 38a; 66) of the gear housing (10), wherein the receptacle (38; 38a; 66) for the third bearing element (20; 20a to 20h) in the gear housing (10) is arranged with respect to the drive shaft (2) laterally next to the drive shaft (2) in a partial region in the circumferential direction of the drive shaft (2), and wherein the third bearing element (20; 20a to 20h) has a contact element (28; 28a to 28h) which is arranged in constant bearing contact with the drive shaft (2),
**characterized in that** the contact element (28; 28a; 28b; 28d; 28e) interacts with a stop (37; 48; 65) which limits the deflection of the contact element (28; 28a; 28b; 28d; 28e) in a direction running perpendicularly to the longitudinal axis (21) of the of the drive shaft (2).

2. Drive unit according to Claim 1, **characterized in that** the contact element (28; 28a; 28b; 28d; 28e) has a flat contact surface (29; 29a; 29b; 29d; 29e) on the side facing the drive shaft (2) in such a manner that the contact surface (29; 29a; 29b; 29d; 29e) lies linearly against the drive shaft (2) in the direction of the longitudinal axis (21) of the drive shaft (2).

3. Drive unit according to Claim 1, **characterized in that** the contact element (28c; 28f; 28g; 28h) has, on the side facing the drive shaft (2), a contact surface (29c; 29f; 29g; 29h) which is curved concavely or is provided with a radius (R) in such a manner that the contact surface (29c; 29f; 29g; 29h) lies against the drive shaft (2) in the circumferential direction of the drive shaft (2).

4. Drive unit according to one of Claims 1 to 3, **characterized in that** the contact element (28; 28a; 28b; 28d; 28e) is connected by at least one elastic intermediate element (32, 33; 46; 53; 58; 62, 63; 67) to a bearing portion (35; 35a; 35d; 35e; 35g; 35h) of the third bearing element (20; 20a to 20h), **in that** the bearing portion (35; 35a; 35d; 35e; 35g; 35h) is arranged in a clamping-fitting or form-fitting manner in the receptacle (38; 38a; 66) of the gear housing (10), and **in that** the at least one intermediate element (32, 33; 46; 53; 58; 62, 63) produces a contact force on the contact element (28; 28a; 28b; 28d; 28e) in the direction of the drive shaft (2).

5. Drive unit according to one of Claims 1 to 4, **characterized in that** the supporting element is designed to limit the deflection of the end region (15) of the drive shaft (1), which deflection is caused by a force F between the toothing (11) and the mating toothing (12), in a direction running perpendicularly to the longitudinal axis (21) of the drive shaft (2) and pointing away from the gear wheel (13).

6. Drive unit according to Claim 1, **characterized in that** the stop (37; 65) is formed on the third bearing element (20; 20d; 20g; 20h).

7. Drive unit according to Claim 1, **characterized in that** the stop (48) is formed on the gear housing (10).

8. Drive unit according to one of Claims 4 to 7, **characterized in that** the intermediate element (32, 33; 53; 62, 63; 67) extends substantially in a direction running perpendicularly to the longitudinal axis (21) of the drive shaft (2).

9. Drive unit according to one of Claims 4 to 7, **characterized in that** the intermediate element (46; 58) extends substantially in a direction running parallel to the longitudinal axis (21) of the drive shaft (2).

10. Drive unit according to one of Claims 1 to 9, **characterized in that** the gear housing (10) has guide regions, which are formed by wall portions (39; 39a, 40; 40a; 40b), for the contact element (28; 28a; 28b; 28c; 28f; 28g), which guide regions extend perpendicularly to the longitudinal axis (21) of the drive shaft (2) and, with the formation of a clearance fit, interact with side walls (41, 42; 51) of the contact element (28; 28a; 28b; 28c; 28f; 28g).

11. Drive unit according to one of Claims 1 to 10, **characterized in that** the gear housing (10) has a basic element (43) which is preferably of shell-shaped design and in which the receptacle (38; 38a; 66) for the bearing device (50) is formed, and **in that** the region of the receptacle (38; 38a; 66) is covered by means of a cover element (44) which is connectable to the basic element (43) and lies against the third bearing element (20; 20a to 20h) in regions.

12. Drive unit according to one of Claims 1 to 11, **characterized in that** the third bearing element (20; 20a to 20h) is designed as a single-part plastics injection molded part.

13. Drive unit according to one of Claims 1 to 11, **characterized in that** the third bearing device (20h) is formed integrally and is composed of a rubber-elastic material.

14. Drive unit according to one of Claims 1 to 13, **characterized in that** the drive shaft (2) is force-actuated in the direction of the gear element (13) by a supporting device (22) acting on an end surface of the drive shaft (2) in the axial direction.

15. Comfort drive in a motor vehicle, such as a power window drive, sliding roof drive, seat adjustment drive or the like with a drive unit (100) according to one of Claims 1 to 14.

## Revendications

1. Unité d'entraînement (100), comprenant un moteur d'entraînement (1), un dispositif de paliers (50), un boîtier de transmission (10) et un élément de transmission (13), dans laquelle le moteur d'entraînement (1) coopère avec l'élément de transmission (13) par le biais d'un arbre d'entraînement (2) supporté sur plusieurs paliers, dans laquelle l'arbre d'entraînement (2) comprend un premier élément de palier (3) qui est disposé sur le côté du moteur d'entraînement (1) opposé à l'élément de transmission (13), un deuxième élément de palier (4) qui est disposé entre le moteur d'entraînement (1) et l'élément de transmission (13) et un troisième élément de palier (20 ; 20a à 20h) qui est disposé sur le côté de l'élément de transmission (13) opposé au moteur d'entraînement (1), dans laquelle le troisième élément de palier (20 ; 20a à 20h) est disposé de manière déplaçable dans une direction perpendiculaire à l'axe longitudinal (21) de l'arbre d'entraînement (2), et dans laquelle le troisième élément de palier (20 ; 20a à 20h) est reçu dans un logement (38 ; 38a ; 66) du boîtier de transmission (10), dans laquelle le logement (38 ; 38a ; 66) pour le troisième élément de palier (20 ; 20a à 20h) dans le boîtier de transmission (10) est disposé, par rapport à l'arbre d'entraînement (2), latéralement près de l'arbre d'entraînement (2) dans une région partielle dans la direction périphérique de l'arbre d'entraînement (2), et dans laquelle le troisième élément de palier (20 ; 20a à 20h) comprend un élément d'appui (28 ; 28a à 28h) qui est disposé en contact d'appui permanent avec l'arbre d'entraînement (2), **caractérisée en ce que** l'élément d'appui (28 ; 28a ; 28b ; 28d ; 28e) coopère avec une butée (37 ; 48 ; 65) qui limite la déviation de l'élément d'appui (28 ; 28a ; 28b ; 28d ; 28e) dans une direction s'étendant perpendiculairement à l'axe longitudinal (21) du de l'arbre d'entraînement (2).

2. Unité d'entraînement selon la revendication 1,
**caractérisée en ce que**
l'élément d'appui (28 ; 28a ; 28b ; 28d ; 28e) comprend, sur le côté tourné vers l'arbre d'entraînement (2), une surface d'appui plane (29 ; 29a ; 29b ; 29d ; 29e) de telle sorte que la surface d'appui (29 ; 29a ; 29b ; 29d ; 29e) s'appuie de manière linéaire contre l'arbre d'entraînement (2) dans la direction de l'axe longitudinal (21) de l'arbre d'entraînement (2).

3. Unité d'entraînement selon la revendication 1,
**caractérisée en ce que**
l'élément d'appui (28c ; 28f ; 28g ; 28h) comprend, sur le côté tourné vers l'arbre d'entraînement (2), une surface d'appui (29c ; 29f ; 29g ; 29h) de courbure concave ou présentant un rayon (R) de telle sorte que la surface d'appui (29c ; 29f ; 29g ; 29h) s'appuie contre l'arbre d'entraînement (2) dans la direction périphérique de l'arbre d'entraînement (2).

4. Unité d'entraînement selon l'une des revendications 1 à 3,
**caractérisée en ce que**
l'élément d'appui (28 ; 28a ; 28b ; 28d ; 28e) est relié à une partie de palier (35 ; 35a ; 35d ; 35e ; 35g ; 35h) du troisième élément de palier (20 ; 20a à 20h) par au moins un élément intermédiaire élastique (32, 33 ; 46 ; 53 ; 58 ; 62, 63 ; 67), **en ce que** la partie de palier (35 ; 35a ; 35d ; 35e ; 35g ; 35h) est disposée dans le logement (38 ; 38a ; 66) du boîtier de transmission (10) par engagement par serrage ou par complémentarité de forme, et **en ce qu'**au moins élément intermédiaire (32, 33 ; 46 ; 53 ; 58 ; 62, 63) produit une force d'appui sur l'élément d'appui (28 ; 28a ; 28b ; 28d ; 28e) en direction de l'arbre d'entraînement (2).

5. Unité d'entraînement selon l'une des revendications 1 à 4,
**caractérisée en ce que**
l'élément de support est conçu pour limiter la déviation de la région d'extrémité (15) de l'arbre d'entraînement (1) dans une direction s'étendant perpendiculairement à l'axe longitudinal (21) de l'arbre d'entraînement (2) et opposée au pignon de transmission (13), provoquée par une force F entre la denture (11) et la denture complémentaire (12).

6. Unité d'entraînement selon la revendication 1,
**caractérisée en ce que**
la butée (37 ; 65) est réalisée sur le troisième élément de palier (20 ; 20d ; 20g ; 20h).

7. Unité d'entraînement selon la revendication 1,
**caractérisée en ce que**
la butée (48) est réalisée sur le boîtier de transmission (10) .

8. Unité d'entraînement selon l'une des revendications 4 à 7,
**caractérisée en ce que**
l'élément intermédiaire (32, 33 ; 53 ; 62, 63 ; 67) s'étend sensiblement dans une direction s'étendant perpendiculairement à l'axe longitudinal (21) de l'arbre d'entraînement (2).

9. Unité d'entraînement selon l'une des revendications 4 à 7,
**caractérisée en ce que**
l'élément intermédiaire (46 ; 58) s'étend sensiblement dans une direction s'étendant parallèlement à l'axe longitudinal (21) de l'arbre d'entraînement (2).

10. Unité d'entraînement selon l'une des revendications 1 à 9,
**caractérisée en ce que**
le boîtier de transmission (10) comprend des régions de guidage, formées par des parties de paroi (39 ; 39a, 40 ; 40a ; 40b), pour l'élément de butée (28 ; 28a ; 28b ; 28c ; 28f ; 28g), lesquelles régions de guidage s'étendent perpendiculairement à l'axe longitudinal (21) de l'arbre d'entraînement (2) et coopèrent avec des parois latérales (41, 42 ; 51) de l'élément de butée (28 ; 28a ; 28b ; 28c ; 28f ; 28g) en réalisant un ajustement avec jeu.

11. Unité d'entraînement selon l'une des revendications 1 à 10,
**caractérisée en ce que**
le boîtier de transmission (10) comprend un élément de base (43) réalisé de préférence en forme de coque, dans lequel est réalisé le logement (38 ; 38a ; 66) pour le dispositif de paliers (50), et **en ce que** la région du logement (38 ; 38a ; 66) est recouverte au moyen d'un élément de recouvrement (44) qui peut être relié à l'élément de base (43) et qui s'appuie dans certaines régions contre le troisième élément de palier (20 ; 20a à 20h).

12. Unité d'entraînement selon l'une des revendications 1 à 11,
**caractérisée en ce que**
le troisième élément de palier (20 ; 20a à 20h) est réalisé sous forme de pièce moulée par injection de plastique d'un seul tenant.

13. Unité d'entraînement selon l'une des revendications 1 à 11,
**caractérisée en ce que**
le troisième dispositif de palier (20h) est réalisé d'un seul tenant et est constitué d'une matière présentant l'élasticité du caoutchouc.

14. Unité d'entraînement selon l'une des revendications 1 à 13,
**caractérisée en ce que**
l'arbre d'entraînement (2) est soumis à une force en direction de l'élément de transmission (13) dans la direction axiale par un dispositif de support (22) agissant sur une face frontale de l'arbre d'entraînement (2) .

15. Entraînement de confort dans un véhicule automobile, tel qu'entraînement de lève-vitre, entraînement de toit coulissant, entraînement de réglage de siège ou similaire comprenant une unité d'entraînement (100) selon l'une des revendications 1 à 14.
